# EUROPEAN PATENT SPECIFICATION

(11) **EP 4 150 995 B1**
(45) Date of publication and mention of the grant of the patent: **20.08.2025**
(21) Application number: 20935983.5
(22) Date of filing: 15.05.2020
(51) Int. Cl.: H04W 72/00

(54) **MULTI-USER PACKET FOR USER EQUIPMENT ASSISTED RETRANSMISSION**
MEHRBENUTZERPAKET FÜR BENUTZERGERÄTEUNTERSTÜTZTE NEUÜBERTRAGUNG
PAQUET MULTI-UTILISATEUR POUR RETRANSMISSION ASSISTÉE PAR ÉQUIPEMENT UTILISATEUR

(43) Date of publication of application: 22.03.2023
(73) Proprietor: QUALCOMM INCORPORATED, San Diego, California 92121-1714 (US)
(72) Inventor: XU, Changlong, San Diego, California 92121-1714 (US); SUN, Jing, San Diego, California 92121-1714 (US); ZHANG, Xiaoxia, San Diego, California 92121-1714 (US); LUO, Tao, San Diego, California 92121-1714 (US); GAAL, Peter, San Diego, California 92121-1714 (US); MONTOJO, Juan, San Diego, California 92121-1714 (US); XUE, Yisheng, San Diego, California 92121-1714 (US); LIU, Chih-Hao, San Diego, California 92121-1714 (US); KHOSHNEVISAN, Mostafa, San Diego, California 92121-1714 (US); OZTURK, Ozcan, San Diego, California 92121-1714 (US)
(74) Representative: Tomkins & Co
(86) International application number: PCT/CN2020/090702
(87) International publication number: WO 2021/227085

(56) References cited:
- WO-A1-2020/068252
- US-A1- 2015 180 616
- US-A1- 2016 173 239
- US-A1- 2020 099 476
- US-A1- 2020 112 400
- US-B1- 8 051 200
- ETSI MCC: "Report of 3GPP TSG RAN2#103bis meeting, Chengdu", 3GPP DRAFT; R2-1816201, vol. RAN WG2, 12 October 2018 (2018-10-12), pages 1 - 240, XP051480178

## Description

### FIELD OF THE DISCLOSURE

Aspects of the present disclosure generally relate to wireless communications, and more particularly to techniques and apparatuses for user equipment (UE) assisted retransmission of multi-user packets.

### BACKGROUND

Wireless communications systems are widely deployed to provide various telecommunications services such as telephony, video, data, messaging, and broadcasts. Typical wireless communications systems may employ multiple-access technologies capable of supporting communications with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and long term evolution (LTE). LTE/LTE-Advanced is a set of enhancements to the universal mobile telecommunications system (UMTS) mobile standard promulgated by the Third Generation Partnership Project (3GPP).

A wireless communications network may include a number of base stations (BSs) that can support communications for a number of user equipment (UEs). A user equipment (UE) may communicate with a base station (BS) via the downlink and uplink. The downlink (or forward link) refers to the communications link from the BS to the UE, and the uplink (or reverse link) refers to the communications link from the UE to the BS. As will be described in more detail, a BS may be referred to as a Node B, a gNB, an access point (AP), a radio head, a transmit receive point (TRP), a New Radio (NR) BS, a 5G Node B, and/or the like.

The above multiple access technologies have been adopted in various telecommunications standards to provide a common protocol that enables different user equipment to communicate on a municipal, national, regional, and even global level. New Radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation.

US 2016/173239 discloses a Tx UE that receives msg2 from a base station and obtains control information necessary for transmitting msg3 from the msg2. Since it is necessary for all of the rest of UEs within a group to receive msg3 (groupcast message), the UEs should know msg3 scheduling information. In order to simply obtain the msg3 scheduling information, it is able to make all UEs in the group receive the msg2. Hence, it is able to make all UEs in the group decode the msg2 using a group-RNTI. The group-RNTI should be shared with each other in advance. As an example, the group-RNTI can be generated based on a group ID. In order to make a plurality of UEs receive PDCCH related to the msg2, the PDCCH related to msg2 can be transmitted in a common search space. Or, in the aspect of a group-specific, the PDCCH related to the msg2 can be transmitted in a UE-specific search space. Yet, it is able to reduce blind decoding complexity by informing/fixing a search space in advance. The Tx UE uses the msg2 to generate and transmit the msg3, whereas the Rx UEs use the msg2 to decode the msg3. Hence, an object of the msg2 may vary according to a UE. Subsequently, if the groupcast msg3 is transmitted, both the base station and the Rx UE receive and decode the msg3. In this case, various situations may occur. There may exist an Rx UE or a base station succeeded in receiving the msg3 and an Rx UE or a base station failed to receive the msg3.

### SUMMARY

According to an aspect of the present disclosure, a method for wireless communication performed by a user equipment (UE) is provided according to appended claim 1.

In another aspect of the present disclosure, a method for wireless communication performed by a base station (BS) is provided according to appended claim 5.

In another aspect of the present disclosure, a UE for wireless communications is provided according to appended claim 6.

In another aspect of the present disclosure, a base station (BS) for wireless communications is provided according to appended claim 7.

The foregoing has outlined rather broadly the features and technical advantages of examples according to the disclosure in order that the detailed description that follows may be better understood. Additional features and advantages will be described . The conception and specific examples disclosed may be readily utilized as a basis for modifying or designing other structures for carrying out the same purposes of the present disclosure. Such equivalent constructions do not depart from the scope of the appended claims. Characteristics of the concepts disclosed, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that features of the present disclosure can be understood in detail, a particular description, may be had by reference to aspects, some of which are illustrated in the appended drawings. It is to be noted, however, that the appended drawings illustrate only certain aspects of this disclosure and are therefore not to be considered limiting of its scope, for the description may admit to other equally effective aspects. The same reference numbers in different drawings may identify the same or similar elements.
FIGURE 1 is a block diagram conceptually illustrating an example of a wireless communications network, in accordance with various aspects of the present disclosure.
FIGURE 2 is a block diagram conceptually illustrating an example of a base station in communication with a user equipment (UE) in a wireless communications network, in accordance with various aspects of the present disclosure.
FIGURE 3 is a diagram illustrating an example of multi-user packet design for New Radio, in accordance with various aspects of the present disclosure.
FIGURES 4A and 4B are diagrams illustrating examples of UE-assisted full multi-user packet physical downlink shared channel communication retransmission, in accordance with various aspects of the present disclosure.
FIGURE 5 is a diagram illustrating an example of UE-assisted partial multi-user packet physical downlink shared channel communication retransmission, in accordance with various aspects of the present disclosure.
FIGURE 6 is a flow diagram illustrating an example process performed, for example, by a UE, in accordance with various aspects of the present disclosure.
FIGURE 7 is a flow diagram illustrating an example process performed, for example, by a base station in accordance with various aspects of the present disclosure.

### DETAILED DESCRIPTION

Various aspects of the disclosure are described more fully below with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings one skilled in the art should appreciate that the scope of the disclosure is intended to cover any aspect of the disclosure, whether implemented independently of or combined with any other aspect of the disclosure. For example, an apparatus may be implemented or a method may be practiced using any number of the aspects set forth. In addition, the scope of the disclosure is intended to cover such an apparatus or method which is practiced using other structure, functionality, or structure and functionality in addition to or other than the various aspects of the disclosure set forth. It should be understood that any aspect of the disclosure disclosed may be embodied by one or more elements of a claim.

Several aspects of telecommunications systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described using terminology commonly associated with 5G and later wireless technologies, aspects of the present disclosure can be applied in other generation-based communications systems, such as and including 3G and/or 4G technologies.

In new radio (NR), performance may be improved for some communication scenarios by using multi-user packets (MUPs), where data for multiple user equipments (UEs) may be multiplexed together in a single packet. For example, in scenarios where a small amount of data is communicated to the multiple UEs, such as a factory automation scenario, an Industrial Internet-of-Things (IIoT) scenario, a broadcast or multicast scenario, an evolved multimedia broadcast multicast service (eMBMS) scenario, a single-cell point-to-multipoint (SC-PTM) scenario, and/or the like, performance may be improved by aggregating the data in an MUP as opposed to transmitting the data via multiple packets. For example, such aggregation or concatenation of data in an MUP may improve coding gains as compared to the transmission of multiple packets. Additionally, or alternatively, downlink control overhead may be reduced because downlink control information (DCI) may be transmitted for the MUP instead of a DCI for multiple packets for different UEs.

Aspects of the present disclosure are directed to UE-assisted retransmission of MUPs. According to some aspects, multiple UEs receive an MUP from a base station. Each UE may transmit acknowledgment/negative acknowledgment (ACK/NACK) feedback in response to the received MUP. The base station may map the ACK/NACK feedback to the UEs. The base station may request one or more UEs associated with an ACK to retransmit at least a portion of the MUP. Aspects of the present disclosure may conserve network resources and computing resources of the base station and/or the UEs.

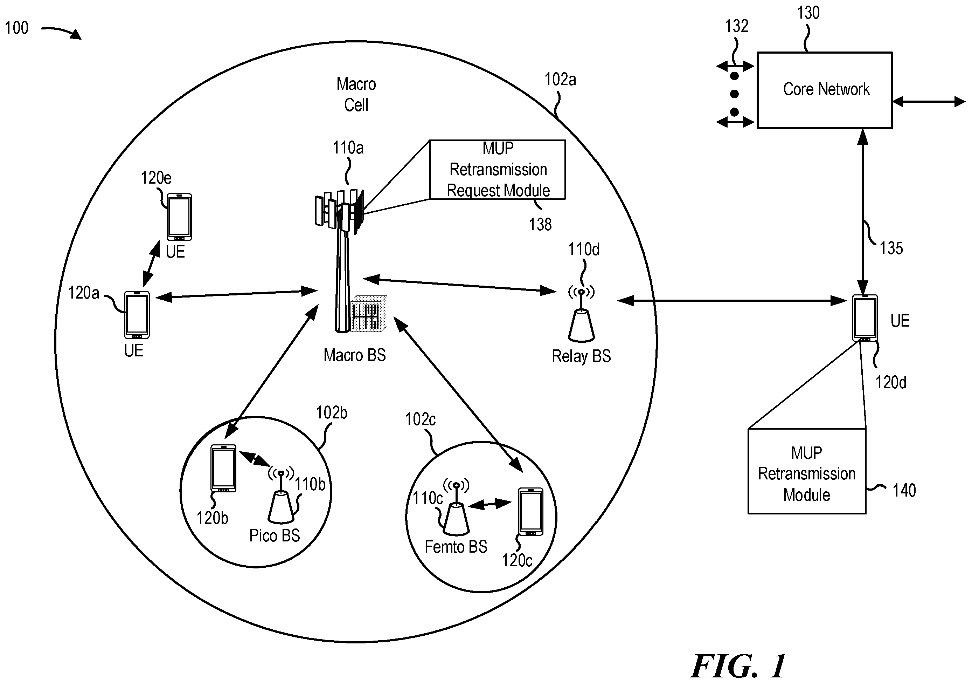

FIGURE 1 is a diagram illustrating a network 100 in which aspects of the present disclosure may be practiced. The network 100 may be a 5G or NR network or some other wireless network, such as an LTE network. The wireless network 100 may include a number of BSs 110 (shown as BS 110a, BS 110b, BS 110c, and BS 110d) and other network entities. A BS is an entity that communicates with user equipment (UEs) and may also be referred to as a base station, an NR BS, a Node B, a gNB, a 5G node B (NB), an access point, a transmit and receive point (TRP), and/or the like. Each BS may provide communications coverage for a particular geographic area. In 3GPP, the term "cell" can refer to a coverage area of a BS and/or a BS subsystem serving this coverage area, depending on the context in which the term is used.

A BS may provide communications coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in FIGURE 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

The wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in FIGURE 1, a relay station 110d may communicate with macro BS 110a and a UE 120d in order to facilitate communications between the BS 110a and UE 120d. A relay station may also be referred to as a relay BS, a relay base station, a relay, and/or the like.

The wireless network 100 may be a heterogeneous network that includes BSs of different types, e.g., macro BSs, pico BSs, femto BSs, relay BSs, and/or the like. These different types of BSs may have different transmit power levels, different coverage areas, and different impact on interference in the wireless network 100. For example, macro BSs may have a high transmit power level (e.g., 5 to 40 Watts) whereas pico BSs, femto BSs, and relay BSs may have lower transmit power levels (e.g., 0.1 to 2 Watts).

As an example, the BSs 110 (shown as BS 110a, BS 110b, BS 110c, and BS 110d) and the core network 130 may exchange communications via backhaul links 132 (e.g., S1, etc.). Base stations 110 may communicate with one another over other backhaul links (e.g., X2, etc.) either directly or indirectly (e.g., through core network 130). The UEs 120 (e.g., 120a, 120b, 120c) may communicate with the core network 130 through a communications link 135.

The core network 130 may be an evolved packet core (EPC), which may include at least one mobility management entity (MME), at least one serving gateway (S-GW), and at least one packet data network (PDN) gateway (P-GW). The MME may be the control node that processes the signaling between the UEs 120 and the EPC. All user IP packets may be transferred through the S-GW, which itself may be connected to the P-GW. The P-GW may provide IP address allocation as well as other functions. The P-GW may be connected to the network operator's IP services. The operator's IP services may include the Internet, the Intranet, an IP multimedia subsystem (IMS), and a packet-switched (PS) streaming service.

The core network 130 may provide user authentication, access authorization, tracking, IP connectivity, and other access, routing, or mobility functions. One or more of the base stations 110 or access node controllers (ANCs) may interface with the core network 130 through backhaul links 132 (e.g., S1, S2, etc.) and may perform radio configuration and scheduling for communications with the UEs 120. In some configurations, various functions of each access network entity or base station 110 may be distributed across various network devices (e.g., radio heads and access network controllers) or consolidated into a single network device (e.g., a base station 110).

UEs 120 (e.g., 120a, 120b, 120c) may be dispersed throughout the wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communications device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

One or more UEs 120 may establish a protocol data unit (PDU) session for a network slice. In some cases, the UE 120 may select a network slice based on an application or subscription service. By having different network slices serving different applications or subscriptions, the UE 120 may improve its resource utilization in the wireless communications system 100, while also satisfying performance specifications of individual applications of the UE 120. In some cases, the network slices used by UE 120 may be served by an AMF (not shown in FIGURE 1) associated with one or both of the base station 110 or core network 130. In addition, session management of the network slices may be performed by a session management function (SMF).

The BSs 110 (e.g., BSs 110a, 110b, 110c, 110d) may include an MUP retransmission request module 138 for transmitting a message requesting an MUP retransmission. For ease of explanation, only one BS 110a is shown as including the MUP retransmission request module 138. The MUP retransmission request module 138 may be a component of each BS 110. The MUP retransmission request module 138 may transmit an MUP physical downlink shared channel (PDSCH) communication (MUP-PDSCH) including multiple payloads to multiple UEs 120. The MUP retransmission request module 138 may receive a negative acknowledgment (NACK) from a first UE 120 of the multiple UEs 120 in response to the MUP-PDSCH communication. The MUP retransmission request module 138 may also receive an acknowledgment (ACK) from a second UE 120 of the multiple UEs 120 in response to the MUP-PDSCH communication. Additionally, the MUP retransmission request module 138 may transmit, to the second UE 120 in response to receiving the NACK from the first UE 120 and the ACK from the second UE 120, a first message requesting the second UE 120 to retransmit one or more payload (e.g., one or more payload portions) of the multiple payloads.

The UEs 120 (e.g., UEs 120a, 120b, 120c, 120d, 120e) may include an MUP retransmission module 140. For ease of explanation, only one UE 120d is shown as including the MUP retransmission module 140. The MUP retransmission module 140 may be a component of each UE 120. The MUP retransmission module 140 may be configured for receiving a multi-user physical (MUP) downlink shared channel (PDSCH) communication comprising multiple payloads (e.g., multiple payload portions). The MUP retransmission module 140 may transmit an ACK in response to decoding the MUP-PDSCH communication. The MUP retransmission module 140 may receive a message requesting retransmission of at least one payload of the multiple payloads. Additionally, the MUP retransmission module 140 may transmit the payload(s) in response to the message.

Some UEs may be considered machine-type communications (MTC) or evolved or enhanced machine-type communications (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communications link. Some UEs may be considered Internet-of-Things (IoT) devices, and/or may be implemented as NB-IoT (narrowband Internet-of-things) devices. Some UEs may be considered a customer premises equipment (CPE). UE 120 may be included inside a housing that houses components of UE 120, such as processor components, memory components, and/or the like.

In general, any number of wireless networks may be deployed in a given geographic area. Each wireless network may support a particular RAT and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere as being performed by the base station 110. For example, the base station 110 may configure a UE 120 via downlink control information (DCI), radio resource control (RRC) signaling, a media access control-control element (MAC-CE) or via system information (e.g., a system information block (SIB).

As indicated above, FIGURE 1 is provided merely as an example. Other examples may differ from what is described with regard to FIGURE 1.

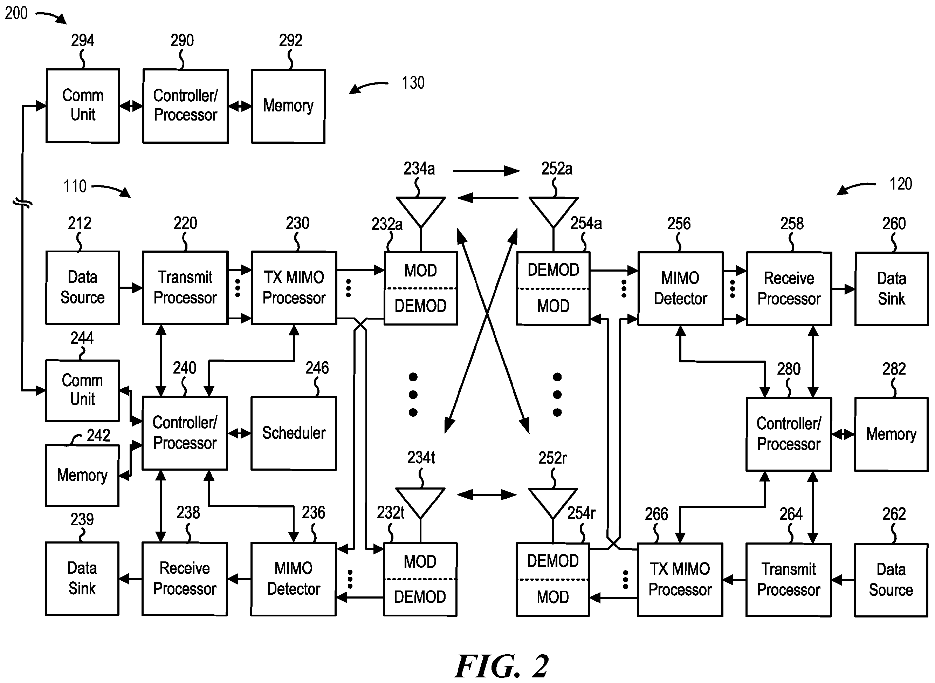

FIGURE 2 shows a block diagram of a design 200 of the base station 110 and UE 120, which may be one of the base stations and one of the UEs in FIGURE 1. The base station 110 may be equipped with T antennas 234a through 234t, and UE 120 may be equipped with R antennas 252a through 252r, where in general T ≥ 1 and R ≥ 1.

At the base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Decreasing the MCS lowers throughput but increases reliability of the transmission. The transmit processor 220 may also process system information (e.g., for semi-static resource partitioning information (SRPI) and/or the like) and control information (e.g., channel quality indicator (CQI) requests, grants, upper layer signaling, and/or the like) and provide overhead symbols and control symbols. The transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively. According to various aspects described in more detail below, the synchronization signals can be generated with location encoding to convey additional information.

At the UE 120, antennas 252a through 252r may receive the downlink signals from the base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for the UE 120 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of the UE 120 may be included in a housing.

On the uplink, at the UE 120, a transmit processor 264 may receive and process data from a data source 262 and control information (e.g., for reports comprising RSRP, RSSI, RSRQ, CQI, and/or the like) from the controller/processor 280. Transmit processor 264 may also generate reference symbols for one or more reference signals. The symbols from the transmit processor 264 may be precoded by a TX MIMO processor 266 if applicable, further processed by modulators 254a through 254r (e.g., for DFT-s-OFDM, CP-OFDM, and/or the like), and transmitted to the base station 110. At the base station 110, the uplink signals from the UE 120 and other UEs may be received by the antennas 234, processed by the demodulators 254, detected by a MIMO detector 236 if applicable, and further processed by a receive processor 238 to obtain decoded data and control information sent by the UE 120. The receive processor 238 may provide the decoded data to a data sink 239 and the decoded control information to a controller/processor 240. The base station 110 may include communications unit 244 and communicate to the core network 130 via the communications unit 244. The core network 130 may include a communications unit 294, a controller/processor 290, and a memory 292.

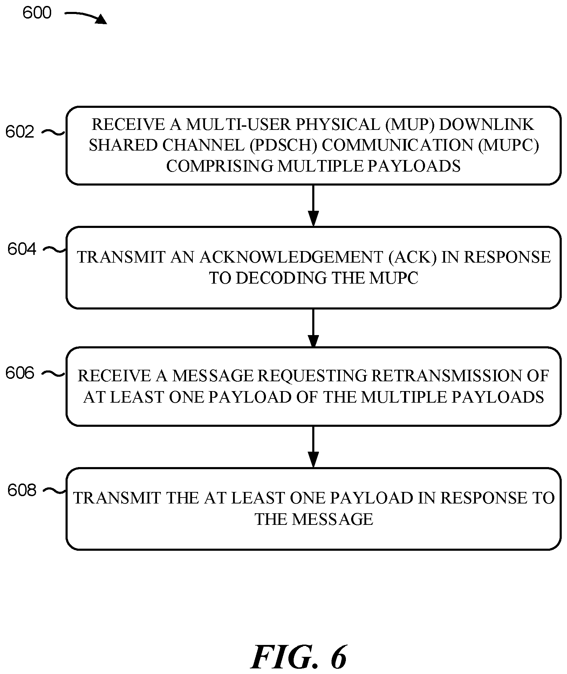

The controller/processor 240 of the base station 110, the controller/processor 280 of the UE 120, and/or any other component(s) of FIGURE 2 may perform one or more techniques associated with MUP retransmission, as described in more detail elsewhere. For example, the controller/processor 240 of the base station 110, the controller/processor 280 of the UE 120, and/or any other component(s) of FIGURE 2 may perform or direct operations of, for example, the processes of FIGURES 6-7 and/or other processes as described. Memories 242 and 282 may store data and program codes for the base station 110 and UE 120, respectively. A scheduler 246 may schedule UEs for data transmission on the downlink and/or uplink.

In some aspects, the UEs 120 may include means for receiving a multi-user physical (MUP) downlink shared channel (PDSCH) communication (MUPC) including multiple payloads; transmitting an acknowledgement (ACK) in response to decoding the MUPC; receiving a message requesting retransmission of at least one payload of the multiple payloads; and transmitting the at least one payload in response to the message.

In some aspects, a BSs 110 may include means for transmitting an MUPC including multiple payloads to multiple UEs; receiving a negative acknowledgement (NACK) from a first UE of the multiple UEs in response to the MUPC; receiving an ACK from a second UE of the multiple UEs in response to the MUPC; and transmitting, to the second UE in response to receiving the NACK from the first UE and the ACK from the second UE, a first message requesting the second UE to retransmit at least one payload of the multiple payloads.

As indicated above, FIGURE 2 is provided merely as an example. Other examples may differ from what is described with regard to FIGURE 2.

In new radio (NR), performance may be improved for some communications scenarios by using multi-user packets (MUPs), where data for multiple UEs 120 is multiplexed together in the payload of a single packet. For example, in scenarios where a small amount of data is communicated to multiple UEs 120, such as a factory automation scenario, an Industrial Internet-of-Things (IIoT) scenario, a broadcast or multicast scenario, an evolved multimedia broadcast multicast service (eMBMS) scenario, a single-cell point-to-multipoint (SC-PTM) scenario, and/or the like, performance may be improved by aggregating the data in an MUP. The aggregation of data in an MUP may improve coding gains and/or reduce downlink control overhead.

Aspects of the present disclosure are directed to UE-assisted retransmission for MUPs. According to some aspects, multiple UEs 120 receive an MUP from a base station 110. Each UE 120 may transmit ACK/NACK feedback in response to the received MUP. The base station may map the ACK/NACK feedback to the UEs 120. Additionally, the base station 110 may request one or more UEs 120 associated with an ACK to retransmit at least a portion of the MUP. Aspects of the present disclosure may conserve network resources and computing resources of the base station 110 and/or the UEs 120.

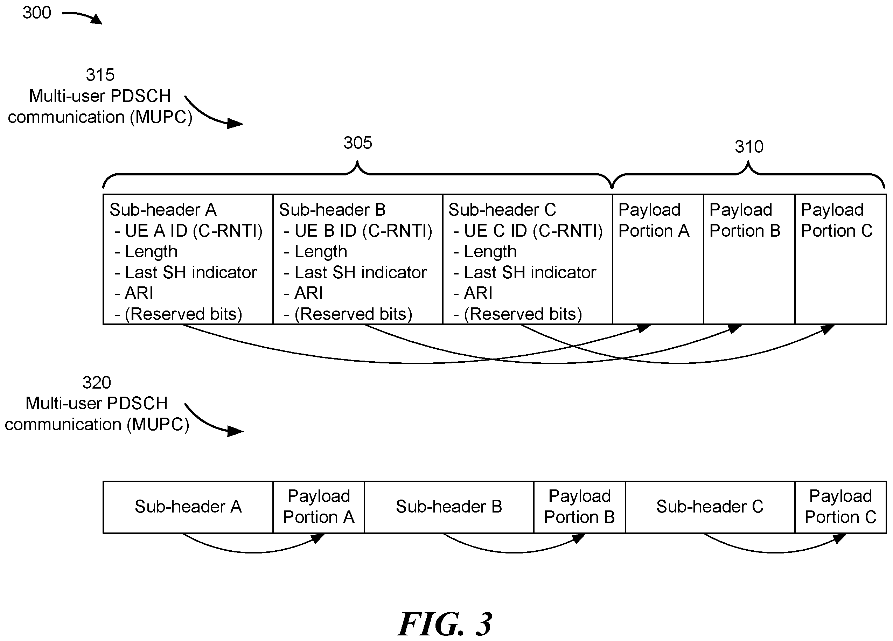

FIGURE 3 is a diagram illustrating an example 300 of an MUP design for NR, in accordance with various aspects of the present disclosure. In some cases, an MUP is referred to as a multi-user physical downlink shared channel (PDSCH) communication (MUPC). The MUPC may also be referred to as an MUP-PDSCH communication.

As shown in FIGURE 3, an MUPC may include multiple sub-headers. Together, the multiple sub-headers form an MUPC header 305. A sub-header may include a UE ID identifying a specific UE 120, such as a cell radio network temporary identifier (C-RNTI). Different sub-headers may include different UE IDs identifying different UEs 120. For example, a first sub-header (e.g., shown as sub-header A) may identify a first UE 120 (e.g., shown as UE A), a second sub-header (e.g., shown as sub-header B) may identify a second UE 120 (e.g., shown as UE B), and a third sub-header (e.g., shown as sub-header C) may identify a third UE 120 (e.g., shown as UE C). Aspects of the present disclosure are not limited to an MUPC for three UEs. The MUPC may aggregate data for any number of UEs (e.g., two or more UEs).

Additionally, the MUPC may include a payload 310 that is aggregated from multiple payload portions (e.g., payload portion a, payload portion b, and payload portion c) corresponding to the multiple UEs 120 (e.g., UE A, UE B, and UE C). Each payload portion may be referred to as a transport block (TB). The different payload portions may carry data intended for different UEs 120. In one example, a first UE 120 (e.g., UE A) may identify a sub-header including a UE identifier for the first UE 120. The first UE 120 may then identify a payload portion that corresponds to the identified sub-header (e.g., payload portion A). Furthermore, the first UE 120 may obtain the data included in the identified payload portion. In this way, data for multiple UEs 120 may be carried in a single MUPC.

In some aspects, as shown in FIGURE 3, a sub-header may include a length field indicating a length (e.g., a size, a number of bits, a number of bytes, and/or the like) of a corresponding payload portion. Additionally, or alternatively, a sub-header may include a field indicating whether that sub-header is the last sub-header (shown as "Last SH Indicator"). One or more of these fields may identify an end of the sub-headers and a start of the payload portions. A UE 120 may identify a start of a payload portion intended for the UE 120 based on the start of the payload portions and a sum of all of the lengths indicated in sub-headers that occur before the sub-header that identifies the UE 120. The UE 120 may identify an end of the payload portion intended for the UE 120 using the length indicated in the sub-header that identifies the UE 120.

As further shown, a sub-header may include an acknowledgment or negative acknowledgment (ACK/NACK) resource indicator (ARI). The ARI may identify (e.g., by itself or in combination with other information) a physical uplink control channel (PUCCH) resource in which the UE 120, identified in the sub-header, is to transmit ACK/NACK feedback for the MUPC (e.g., the payload portion, of the MUPC, that corresponds to the UE 120). A base station 110 may configure the ARIs included in different sub-headers to indicate different PUCCH resources, such that different UEs 120 transmit ACK/NACK feedback for the MUPC in different PUCCH resources (e.g., different time resources, different symbols, different slots, different subframes, different frequency resources, different resource blocks, and/or the like). In this way, the base station 110 may map ACK/NACK feedback to a UE 120 based on the PUCCH resource in which the ACK/NACK feedback is received.

In some aspects, the header 305 of the MUPC and the payload 310 of the MUPC may be included in a PDSCH payload. Additionally, or alternatively, the header of the MUPC (e.g., all of the sub-headers) may be included in a physical layer header (e.g., rather than a media access control (MAC) header), thereby allowing the header to be processed more quickly by the UEs 120 and reducing latency. In some aspects, each of the sub-headers may be the same size as one another. Additionally, or alternatively, the header may be a fixed or pre-configured size across multiple MUPCs. Thus, the sub-headers may include one or more reserved bits (e.g., filler bits) to achieve such alignment and reduce complexity. Alternatively, different sub-headers included in a header may have different sizes. Additionally, or alternatively, different headers included in different MUPCs may have different sizes. In this way, an MUPC may be flexibly configured (e.g., depending on a number of UEs 120 for which the MUPC is intended).

As shown by reference number 315, in some aspects, an MUPC may have a first format where the sub-headers are grouped consecutively at the beginning of the MUPC. Additionally, or alternatively, if the MUPC is transmitted using multiple code blocks, the sub-headers may be included in a first code block (e.g., an initial code block or a first code block in time) of the MUPC. As such, the sub-headers may occur closer in time to a demodulation reference signal (DMRS), which may improve reliability of reception of the sub-headers. Furthermore, reducing a time between sub-headers and a DMRS may reduce an amount of data to be processed by UEs 120 because a UE 120 may process the sub-headers to determine whether there is a payload portion for the UE 120.As shown by reference number 320, in some aspects, an MUPC may have a second format where each sub-header is located immediately before a respective payload portion corresponding to that sub-header.

In some aspects, a DCI (not shown in FIGURE 3) may schedule and/or activate an MUPC. The DCI may be transmitted on a downlink control channel, such as a physical downlink control channel (PDCCH)). The DCI may include a group-radio network temporary identifier (RNTI) assigned to a group of UEs 120. A UE 120 included in the group may determine that the DCI includes information for the UE 120 based on the group-RNTI. For example, the DCI may be descrambled based on the group-RNTI. Thus, the DCI may include the group-RNTI for the group of UEs 120 (e.g., a group-specific RNTI), and the MUPC sub-headers may include UE-specific RNTIs. Accordingly, each UE 120 configured with the group-RNTI may decode the PDSCH (e.g., the header 305 and payload 310 of the MUPC). As described above, by parsing the header 305, a UE 120 may determine if it is being addressed and identify a corresponding payload portion (e.g., TB).

In some aspects, the DCI may include scheduling information and/or control information for the MUPC, which may indicate PDSCH resources that carry the MUPC, a modulation and coding scheme (MCS) for the MUPC, and/or the like. Additionally, or alternatively, the MUPC may be pre-scheduled using semi-persistent scheduling (SPS) (e.g., where scheduling information may be indicated in a radio resource control (RRC) message), and the UE 120 may activate and/or deactivate monitoring for the MUPC based at least in part on the DCI. In some aspects, the DCI may be a same format, size, and/or the like as unicast DCI, thereby reducing complexity.

In one configuration, a UE 120 configured to monitor a group-RNTI may decode data for other UEs 120 in the MUPC, when attempting to decode its own data. In some cases, the UE 120 may not be served by a particular MUPC. Still, the UE 120 is unaware of whether it is served by the particular MUPC until the UE 120 decodes the header 305. In some aspects, a DCI piggyback design may separate the header 305 from the payload out of MUP-PDSCH. That is, the header 305 may be separately encoded from the payload 310. Radio resource control (RRC) signaling may configure the UE 120 to decode the payload 310.

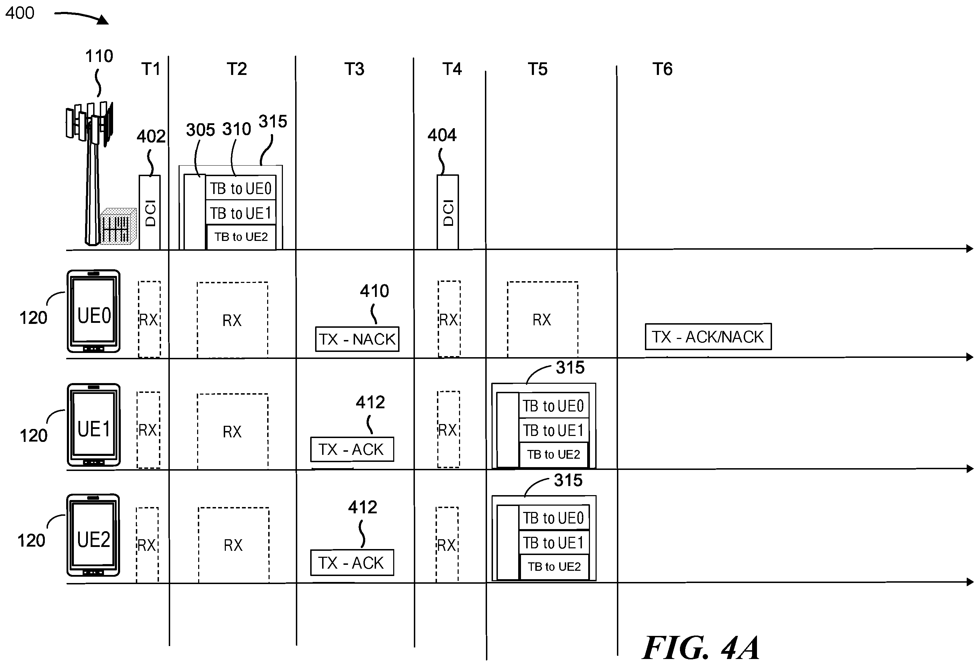

FIGURE 4A is a diagram illustrating an example 400 of UE-assisted full MUPC retransmission, in accordance with various aspects of the present disclosure. As shown in FIGURE 4A, a first UE 120 (e.g., shown as UE0), a second UE 120 (e.g., shown as UE1), and a third UE 120 (e.g., shown as UE2) may be configured as a mutual assisting group. Additionally, the first, second, and third UEs 120 may be configured with a group-RNTI.

In one example, at a first time period (T1), a base station 110 (e.g., a gNB) may transmit a first DCI 402 for an MUPC 315, in a similar manner as described in connection with FIGURE 3. The first DCI 402 may correspond to the group-RNTI, such that each UE 120 configured with the group-RNTI may receive and decode the first DCI 402.

Each UE 120 configured with the group-RNTI may determine, or attempt to determine, whether a sub-header of the MUPC 315 includes a UE-ID of the UE 120. Additionally, each UE 120 configured with the group-RNTI may attempt to identify or decode a payload portion corresponding to the sub-header including the UE-ID. Such an attempt may be successful, or may fail, and the UE 120 may selectively transmit ACK/NACK feedback based on whether the attempt succeeded or failed.

In the example of FIGURE 4A, the first, second, and third UEs 120 belong to the same group and are configured with a same group-RNTI. At a second time period (T2), the base station 110 transmits the MUPC 315 to the first, second, and third UEs 120. Additionally, at the second time period (T2), the first, second, and third UEs 120 attempt to decode the MUPC 315 based on the first DCI 402. In the current example, a payload 310 of the MUPC 315 includes a first payload portion (e.g., shown as TB to UE0), a second payload portion (e.g., shown as TB to UE1), and a third payload portion (e.g., shown as TB to UE2). Each payload portion of the payload 310 may correspond to a different UE 120 configured with the group-RNTI. For example, the first payload portion (e.g., TB to UE0) corresponds to the first UE (e.g., UE0).

As described above, at the second time period (T2), each UE 120 may receive and attempt to decode the MUPC 315. As described, by parsing the header 305, a UE 120 can identify a portion of the payload 310 designated for itself. In the example of FIGURE 4A, the first UE 120 fails to decode or receive the MUPC 315. Therefore, the first UE 120 transmits a NACK 410 to the base station 110 at a third time period (T3). Additionally, the second and third UEs 120 successfully receive and decode the MUPC 315. Therefore, each one of the second and third UEs 120 transmits an ACK 412 to the base station 110 (T3).

In one configuration, the UEs 120 may identify a PUCCH resource, for acknowledging receipt (e.g., ACK/NACK) of the payload portion based on a UE-specific ARI included in the sub-header of the MUPC 315 that identifies the UE 120. The PUCCH resource may also be identified based on a common ARI included in the first DCI 402. For example, the UE 120 may determine the PUCCH resource as a function of the common ARI and the UE-specific ARI.

In one configuration, at time period T3, each UE 120 transmits an ACK 412 if the UE 120 has decoded the entire payload 310 (e.g., each payload portion) of the MUPC 315, as opposed to only decoding a payload portion designated for the UE 120. For example, in order to transmit the ACK 412, the second UE 120 may be specified to successfully decode the payload portion designated for the first UE 120 (e.g., TB for UE0), the payload portion designated for the second UE 120 (e.g., TB for UE1), and the payload portion designation for the third UE 120 (e.g., TB for UE2).

In another configuration, a payload portion may not be designated for a UE 120. In this configuration, the header 305 may still include a sub-header for the UE 120. The UE 120 may decode the sub-header to determine that a payload portion is not designated for the UE 120. In this configuration, the UE 120 without a designated payload portion may be referred to as an assisting-only UE. Additionally, in this configuration, the assisting-only UE 120 transmits an ACK 412 if it has successfully decoded each payload portion of the payload 310.

In the example of FIGURE 4A, based on the NACK 410 received from the first UE 120, the base station 110 determines the first UE 120 failed to receive or decode the MUPC 315. Additionally, based on the ACK 412 received from the second and third UEs 120, the base station 110 determines the second and third UEs 120 successfully received and decoded MUPC 315. Therefore, the second and third UEs 120 have successfully received and decoded the payload portion of the first UE 120.

In response to the ACKs 412 from the second and third UEs 120 and the NACK 410 from the first UE 120, at a fourth time period (T4), the base station 110 transmits a message to the second and/or third UEs 120 requesting retransmission of the MUPC 315. In one configuration, the message is a second DCI 404 associated with the group-RNTI. The second DCI 404 may include a field to trigger the retransmission. The field may be an added field or a repurposed field. A downlink channel communication, such as a PDSCH, is not associated with the second DCI 404.

The retransmission may be a full retransmission, where the entire MUPC 315 is retransmitted. Alternatively, the retransmission may be a partial retransmission, where only a portion of the MUPC is retransmitted. A hybrid automatic repeat request (HARQ) process ID and an NDI included in the second DCI 404 may indicate whether the retransmission is full or partial. That is, the HARQ process ID and the NDI may identify one or more payload portions for retransmission. Additionally, the second DCI identifies one or more resources for the retransmission. In one configuration, a time domain resource assignment (TDRA) or a frequency domain resource assignment (FDRA) in the second DCI 404 may be used for the retransmission.

As described above, in FIGURE 4A, the base station 110 transmits the second DCI 404 to the first, second, and third UEs 120 at the fourth time period (T4). As described, FIGURE 4A is an example of a full retransmission. Therefore, a format of the second DCI 404 matches a format of the first DCI 402. For example, the HARQ process ID and the NDI of the second DCI 404 match the HARQ process ID and the NDI of the first DCI 402.

In one configuration, a UE 120 that successfully decoded an initial MUPC performs a retransmission in response to receiving the second DCI 404 if a slot offset (K0) is greater than zero (e.g., the PDSCH and the PDCCH are in different slots).

In the example of FIGURE 4A, the second and/or third UEs 120 receive the second DCI 404 and determine that both the HARQ process ID and the NDI of the second DCI 404 match the HARQ process ID and the NDI of the first DCI 402. As a result, the second and/or third UEs 120 determine the second DCI 404 is an assisted retransmission grant for a full retransmission. In the example of FIGURE 4A, K0 is greater than zero for the second and third UEs 120.

In response to receiving the second DCI 404, the second and/or third UEs 120 may retransmit the MUPC 315 at a fifth time period (T5). The second and/or third UEs 120 are not specified to change the MUPC 315, such that the first UE 120 may soft combine the retransmitted MUPC 315. Still, this comes at a cost to the second and third UEs because both the second and third payload portions are retransmitted to each of the UEs 120. In this example, none of the UEs 120 in the group-RNTI have a use for the second or third payload portions.

The second and/or third UEs 120 may retransmit the MUPC 315 via one or more resources indicated in the second DCI 404. Additionally, the second and/or third UEs 120 may re-encode the MUPC 315 and rate match the re-encoded MUPC 315 to the one or more indicated resources. The redundancy version identifier (RVID) used to retransmit the MUPC 315 matches the RVID of the first DCI 402.

As described, both the second and third UEs 120 may retransmit the MUPC 315. In some examples, the second UE 120 may receive the MUPC 315 retransmission from the third UE 120, and vice versa. In such examples, the second and third UEs 120 refrain from transmitting an ACK 412 or NACK 410 for the MUPC 315 retransmission.

The retransmissions from the second and/or third UEs 120 may follow a PDSCH waveform in a system frame number (SFN) fashion.

In the example of FIGURE 4A, at the fifth time period (T5), the first UE 120 receives the second DCI 404 and treats the second DCI 404 as a retransmission grant for itself. The first UE 120 may combine the retransmitted MUPC 315 with the initial MUPC 315 based on a log-likelihood ratio (LLR) method. That is, the first UE 120 may apply soft combining on the retransmitted MUPC 315 and the initial MUPC 315. From the perspective of the first UE 120, the source of the MUPC 315 retransmission is transparent.

In one configuration, the first UE 120 transmits an ACK 412 or a NACK 410 to the base station 110 in response to the MUPC retransmission. The second DCI 404 may provide an uplink grant for transmitting the ACK 412 or the NACK 410 at a sixth time period (T6). In some aspects, multiple MUPC 315 retransmissions may be performed by one or more UEs 120 that successfully decoded an initial transmission of the MUPC 315.

The example of FIGURE 4A is an example of macro diversity. In addition to, or as an alternate to, the aspects described in FIGURE 4A, the second and/or third UEs 120 may detect the NACK 410 transmitted by the first UE 120. A retransmission of the MUPC 315 may be triggered in response to detecting the NACK 410 transmitted by the first UE 120.

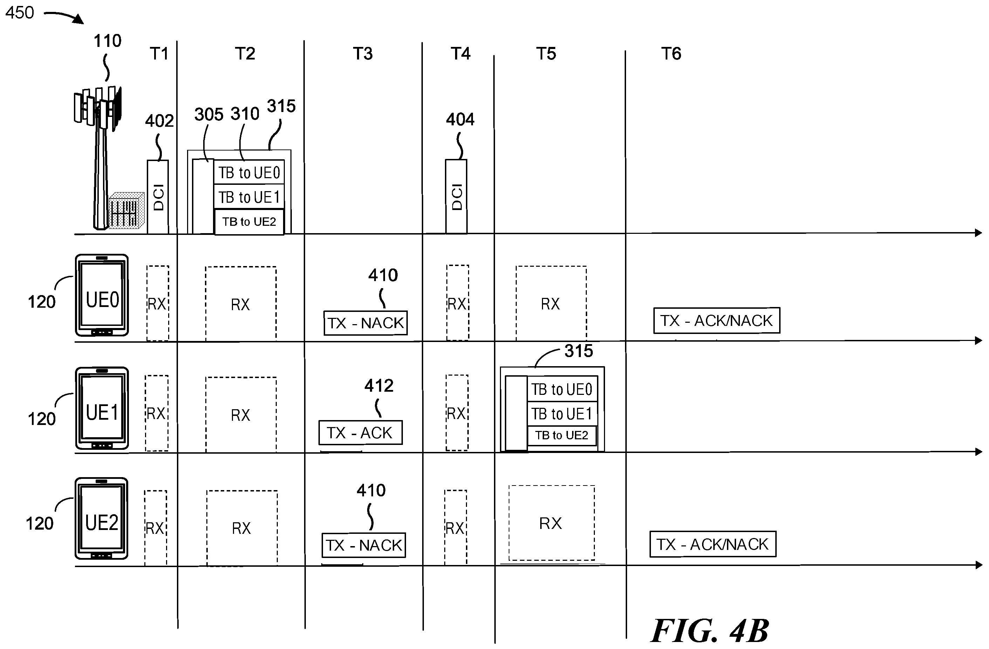

FIGURE 4B is a diagram illustrating another example 450 of UE-assisted full MUPC retransmission, in accordance with various aspects of the present disclosure. As shown in FIGURE 4B, at time period T1, a base station 110 may transmit a first DCI 402 to a first UE 120, second UE 120, and third UE 120, as described in FIGURE 4A. Additionally, as described in FIGURE 4A, at time period T2, the base station 110 may transmit the MUPC 315 to the first, second, and third UEs 120.

In the example of FIGURE 4B, at time period T3, the first and third UEs 120 transmit a NACK 410 in response to the MUPC 315 (e.g., an initial MUPC 315 transmission). Additionally, at time period T3, the second UE 120 transmits an ACK 412 in response to the initial MUPC 315 transmission. In response to the ACK 412 from the second UE 120 and the NACKs 410 from the first and third UEs 120, at time period T4, the BS 110 transmits a second DCI 404 to the first, second, and third UEs 120.

The second UE 120 identifies the second DCI 404 as a retransmission request and retransmits the MUPC 315, in a similar manner as described in connection with FIGURE 4A. Additionally, each one of the first and the third UEs 120 receives the second DCI 404 and treats the second DCI 404 as a retransmission grant itself. At time period T5, the first and third UEs 120 receive the MUPC 315 retransmission from the second UE 120, in a similar manner as described in connection with FIGURE 4A.

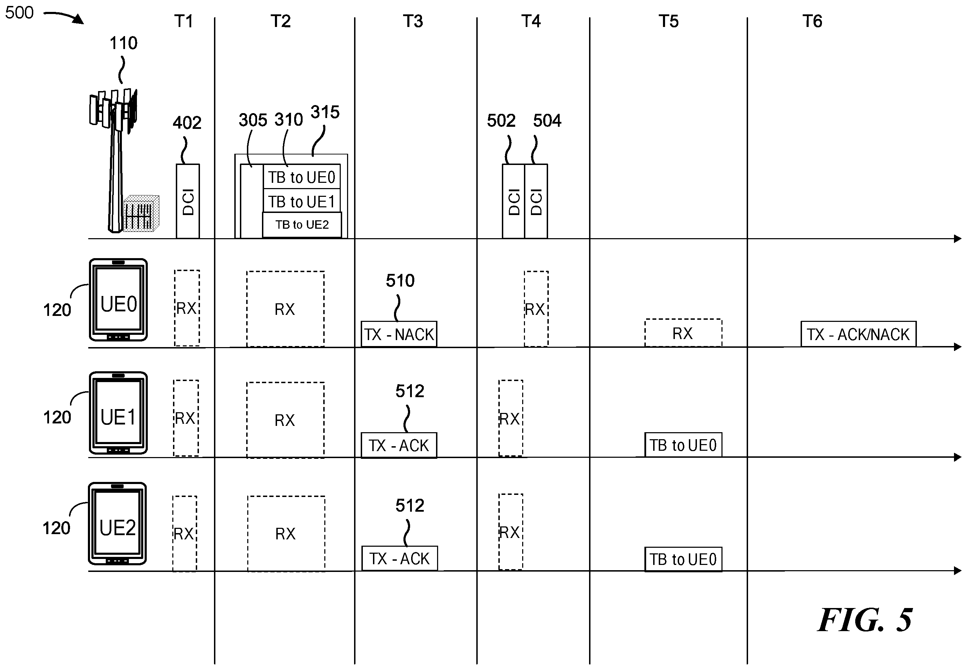

As described, the retransmission may be a partial retransmission (e.g., selective retransmission). FIGURE 5 is a diagram illustrating an example 500 of UE-assisted partial MUPC retransmission, in accordance with various aspects of the present disclosure. As shown in FIGURE 5, at time period T1, a base station 110 may transmit a first DCI 402 to a first UE 120, second UE 120, and third UE 120, in a similar manner as described in connection with FIGURE 4A. Additionally, in a similar manner as described in connection with FIGURE 4A, at time period T2, the base station 110 may transmit the MUPC 315 to the first, second, and third UEs 120.

In the example of FIGURE 5, at time period T3, the first UE 120 transmits a NACK 510 in response to the initial MUPC 315 transmission. Additionally, at time period T3, the second and third UEs 120 transmits an ACK 512 in response to the initial MUPC 315 transmission. In response to the ACKs 512 from the second and third UEs 120 and the NACK 410 from the first UE 120, the BS 110 initiates a selective retransmission procedure.

In the example of FIGURE 5, for the selective retransmission procedure, the BS 110 identifies the one or more payload portions that were not received by one or more UEs 120. In this example, the first UE 120 did not receive the first payload portion (e.g., TB for UE0). In response, the BS 110 transmits a message requesting the second and/or third UEs 120 to only retransmit the portion of the MUPC 315 corresponding to the first payload portion (e.g., the first payload portion and the corresponding sub-header).

In one configuration, at time period T4, the BS transmits a second DCI 502 to the second and/or third UEs 120 because the second and third UEs transmitted ACKs 510 in response to the initial MUPC 315. The second DCI 502 may be associated with the group-RNTI of the first, second, and third UEs 120. The content of the second DCI 502 distinguishes the second DCI 502 from an initial transmission grant (e.g., the first DCI 402, as described in FIGURE 4A). That is, the content of the second DCI 502 identifies the second DCI 502 as a partial retransmission request. In one configuration, a HARQ process ID and NDI of the second DCI 502 identifies specific payload portions (e.g., specific TBs) for the retransmission. Additionally, or alternatively, a separate bit field of the second DCI 502 may identify specific payload portions (e.g., specific TBs) for the retransmission.

As shown in FIGURE 5, at time period T5, the second and/or third UEs 120 may retransmit the payload portion identified in the second DCI 502 (e.g., the first payload portion) via resources identified in a third DCI 504. The resources may include an RVID, a modulation coding scheme (MCS), and/or the like. The partial retransmissions from the second and/or third UEs 120 may follow a PDSCH waveform in a system frame number (SFN) fashion.

In one configuration, as shown in FIGURE 5, at time period T4, the BS 110 transmits a third DCI 504 to the first UE 120 because the first UE 120 transmitted the NACK 512 in response to the initial MUPC 315 transmission. The NDI of the third DCI 504 may be flipped or the HARQ process ID of the third DCI 504 may be different from the HARQ process ID of the first DCI 402. The first UE 120 may treat the third DCI 504 as a grant for a new transmission, where the new transmission is received according to the information in the third DCI 504.

In the example of FIGURE 5, at time period T5, the first UE 120 receives the retransmission from the second and or third UEs 120. Because the second DCI 502 requests one or more specific payload portions, the first UE 120 may not perform soft combining on the retransmitted payload portion and the initial payload portion. From the perspective of the first UE 120, the source of the retransmitted payload portion is transparent. At time period T6, the first UE 120 may transmit an ACK 510 or a NACK 512 to the BS 110 in response to receiving the retransmitted payload portion.

As indicated above, FIGURES 3, 4A, 4B, and 5 are provided as examples. Other examples may differ from what is described with respect to FIGURES 3, 4A, 4B, and 5.

FIGURE 6 is a diagram illustrating an example process 600 performed, for example, by a UE, in accordance with various aspects of the present disclosure. The example process 600 is an example of wireless communications, by a UE (user equipment), such as one of the UEs 120 described in FIGURE 1 or by a MUP retransmission module 140 as described in FIGURE 1. The process 600 may include

FIGURE 6 is a diagram illustrating an example process 600 performed, for example, by a UE, in accordance with various aspects of the present disclosure. The example process 600 is an example of a multi-user packet for user equipment assisted retransmission.

As shown in FIGURE 6, in some aspects, the process 600 may include receiving a multi-user physical (MUP) downlink shared channel (PDSCH) communication (MUPC) comprising a plurality of payloads (block 602). For example, the UE (e.g., using the antenna 252, DEMOD 254, MIMO detector 256, receive processor 258, controller/processor 280, memory 282, and/or the like) can receive a multi-user physical (MUP) downlink shared channel (PDSCH) communication (MUPC).

As shown in FIGURE 6, in some aspects, the process 600 may include transmitting an acknowledgement (ACK) in response to decoding the MUPC (block 604). For example, the UE (e.g., using the antenna 252, MOD 254, TX MIMO processor 266, transmit processor 264, controller/processor 280, memory 282, and/or the like) can transmit an acknowledgement (ACK).

As shown in FIGURE 6, in some aspects, the process 600 may include receiving a message requesting retransmission of at least one payload of the plurality of payloads (block 606). For example, the UE (e.g., using the antenna 252, DEMOD 254, MIMO detector 256, receive processor 258, controller/processor 280, memory 282, and/or the like) can receive a message requesting retransmission.

As shown in FIGURE 6, in some aspects, the process 600 may include transmitting the at least one payload in response to the message (block 608). For example, the UE (e.g., using the antenna 252, MOD 254, TX MIMO processor 266, transmit processor 264, controller/processor 280, memory 282, and/or the like) can transmit the at least one payload.

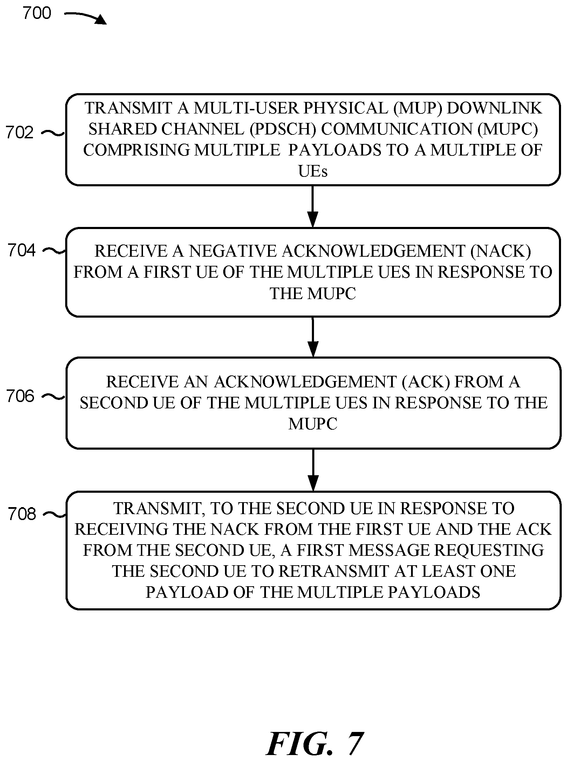

FIGURE 7 is a diagram illustrating an example process 700 performed, for example, by a BS, in accordance with various aspects of the present disclosure. The example process 700 is an example of wireless communications, by a BS, such as the BS 110 as described in FIGURE 1 or by a MUP retransmission request module 138 as described in FIGURE 1. The process 700 includes

FIGURE 7 is a diagram illustrating an example process 700 performed, for example, by a base station, in accordance with various aspects of the present disclosure. The example process 700 is an example of a multi-user packet for user equipment assisted retransmission.

As shown in FIGURE 7, in some aspects, the process 700 may include transmitting a multi-user physical (MUP) downlink shared channel (PDSCH) communication (MUPC) comprising a plurality of payloads to a plurality of UEs (block 702). For example, the base station (e.g., using the antenna 234, MOD 232, TX MIMO processor 230, transmit processor 220, controller/processor 240, memory 242, and/or the like) can transmit a multi-user physical (MUP) downlink shared channel (PDSCH) communication (MUPC).

As shown in FIGURE 7, in some aspects, the process 700 may include receiving a negative acknowledgement (NACK) from a first UE of the plurality of UEs in response to the MUPC (block 704). For example, the base station (e.g., using the antenna 234, DEMOD 232, MIMO detector 236, receive processor 238, the controller/processor 240, memory 242, and/or the like) can receive a negative acknowledgement (NACK) from a first UE of the plurality of UEs in response to the MUPC.

As shown in FIGURE 7, in some aspects, the process 700 may include receiving an acknowledgement (ACK) from a second UE of the plurality of UEs in response to the MUPC (block 706). For example, the base station (e.g., using the antenna 234, DEMOD 232, MIMO detector 236, receive processor 238, the controller/processor 240, memory 242, and/or the like) can receive an acknowledgement (ACK) from a second UE of the plurality of UEs in response to the MUPC.

As shown in FIGURE 7, in some aspects, the process 700 may include transmitting, to the second UE in response to receiving the NACK from the first UE and the ACK from the second UE, a first message requesting the second UE to retransmit at least one payload of the plurality of payloads (block 708). For example, the base station (e.g., using the antenna 234, MOD 232, TX MIMO processor 230, transmit processor 220, controller/processor 240, memory 242, and/or the like) can transmit a first message requesting the second UE to retransmit at least one payload of the plurality of payloads.

The foregoing disclosure provides illustration and description, but is not intended to be exhaustive or to limit the aspects to the precise form disclosed. Modifications and variations may be made in light of the above disclosure or may be acquired from practice of the aspects.

As used, the term "component" is intended to be broadly construed as hardware, firmware, and/or a combination of hardware and software. As used, a processor is implemented in hardware, firmware, and/or a combination of hardware and software.

Some aspects are described in connection with thresholds. As used, satisfying a threshold may, depending on the context, refer to a value being greater than the threshold, greater than or equal to the threshold, less than the threshold, less than or equal to the threshold, equal to the threshold, not equal to the threshold, and/or the like.

It will be apparent that systems and/or methods described may be implemented in different forms of hardware, firmware, and/or a combination of hardware and software. The actual specialized control hardware or software code used to implement these systems and/or methods is not limiting of the aspects. Thus, the operation and behavior of the systems and/or methods were described without reference to specific software code-it being understood that software and hardware can be designed to implement the systems and/or methods based, at least in part, on the description.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used should be construed as critical or essential unless explicitly described as such. Also, as used, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method (600) for wireless communications performed by a user equipment, UE, comprising:
receiving (602) a multi-user physical, MUP, downlink shared channel, PDSCH, communication, MUPC, comprising a plurality of payloads;
transmitting (604) an acknowledgement, ACK, in response to decoding the MUPC;
receiving (606) a message requesting retransmission of at least one payload of the plurality of payloads, wherein the message comprises a group-radio network temporary identifier, RNTI, downlink control information, DCI, comprising a field for triggering the retransmission;
retransmitting (608) the at least one payload to one or more other UEs in response to the message; and
determining a resource for the retransmission based on a time domain resource assignment, TDRA, or a frequency domain resource assignment, FDRA, in the group-RNTI DCI.

2. The method of claim 1, in which:
the MUPC further comprises a plurality of sub-headers corresponding to a plurality of UEs;
each one of the plurality of sub-headers comprises a UE identifier for identifying one of the plurality of UEs and a length field for indicating a length of a corresponding payload of the plurality of payloads; and
each one of the plurality of payloads corresponding to a different UE of the plurality of UEs.

3. The method of claim 1, further comprising performing a plurality of retransmissions of the at least one payload in response to receiving a plurality of message requesting the retransmission.

4. The method of claim 1, further comprising:
receiving a retransmission of the plurality of payloads; and
refraining from transmitting an ACK or a negative acknowledgement in response to receiving the retransmission.

5. A method (700) for wireless communications performed by a base station, BS, comprising:
transmitting (702) a multi-user physical, MUP, downlink shared channel, PDSCH, communication, MUPC, comprising a plurality of payloads to a plurality of UEs;
receiving (704) a negative acknowledgement, NACK, from a first UE of the plurality of UEs in response to the MUPC;
receiving (706) an acknowledgement, ACK, from a second UE of the plurality of UEs in response to the MUPC; and
transmitting (708), to the second UE in response to receiving the NACK from the first UE and the ACK from the second UE, a first message requesting the second UE to retransmit at least one payload of the plurality of payloads to one or more other UEs of the plurality of UEs, wherein the message comprises a group-radio network temporary identifier, RNTI, downlink control information, DCI, comprising a field for triggering the retransmission, and wherein the DCI identifies a resource for the retransmission using a time domain resource assignment, TDRA, or a frequency domain resource assignment, FDRA.

6. A user equipment, UE, (120) for wireless communication, comprising:
a memory, and
at least one processor operatively coupled to the memory, the memory and the at least one processor configured:
to receive a multi-user physical, MUP, downlink shared channel, PDSCH, communication, MUPC, comprising a plurality of payloads;
to transmit an acknowledgement, ACK, in response to decoding the MUPC;
to receive a message requesting retransmission of at least one payload of the plurality of payloads, wherein the message comprises a group-radio network temporary identifier, RNTI, downlink control information, DCI, comprising a field for triggering the retransmission;
to retransmit the at least one payload to one or more other UEs in response to the message; and
to determine a resource for the retransmission based on a time domain resource assignment, TDRA, or a frequency domain resource assignment, FDRA, in the group-RNTI DCI.

7. A base station, BS, (110) for wireless communication, comprising:
a memory, and at least one processor operatively coupled to the memory, the memory and the at least one processor configured:
to transmit a multi-user physical, MUP, downlink shared channel, PDSCH, communication, MUPC, comprising a plurality of payloads to a plurality of UEs;
to receive a negative acknowledgement, NACK, from a first UE of the plurality of UEs in response to the MUPC;
to receive an acknowledgement, ACK, from a second UE of the plurality of UEs in response to the MUPC; and
to transmit, to the second UE in response to receiving the NACK from the first UE and the ACK from the second UE, a first message requesting the second UE to retransmit at least one payload of the plurality of payloads to one or more other UEs of the plurality of UEs,
wherein the message comprises a group-radio network temporary identifier, RNTI, downlink control information, DCI, comprising a field for triggering the retransmission, and wherein the DCI identifies a resource for the retransmission using a time domain resource assignment, TDRA, or a frequency domain resource assignment, FDRA.

## Patentansprüche

1. Ein Verfahren (600) für Drahtloskommunikationen, dass durch eine Nutzereinrichtung bzw. UE (UE = user equipment) durchgeführt wird, das Folgendes aufweist:
Empfangen (602) einer Mehrnutzerkommunikation des physischen, gemeinsam genutzten Abwärtsstreckenkanals bzw. MUPC (MUPC = multi-user physical dowlink shared channel communication), die eine Vielzahl von Nutzlasten aufweist,
Senden (604) einer Bestätigung bzw. eines ACK (ACK = acknowledgement) ansprechend auf Decodieren der MUPC;
Empfangen (606) einer Nachricht, die eine erneute Sendung von wenigstens einer Nutzlast der Vielzahl von Nutzlasten anfragt, wobei die Nachricht eine Gruppen-RNTI-DCI (RNTI = radio network temporary identifier bzw. temporärer Funknetzwerkidentifikator, DCI = downlink control information bzw. Abwärtsstreckensteuerinformation) aufweist, die ein Feld zum Auslösen der erneuten Sendung aufweist;
erneutes Senden (608) der wenigstens einen Nutzlast an eine oder mehrere andere UEs ansprechend auf die Nachricht; und
Bestimmen einer Ressource für die erneute Sendung basierend auf einer Zeitbereichsressourcenzuweisung bzw. TDRA (TDRA = time domain resource assignment) oder einer Frequenzbereichsressourcenzuweisung bzw. FDRA (FDRA = frequency domain resource assignment) in der Gruppen-RNTI-DCI.

2. Verfahren nach Anspruch 1, in dem:
die MUPC weiter eine Vielzahl von Sub-Headern aufweist, die der Vielzahl von UEs entsprechen;
jeder der Vielzahl von Subheadern einen UE-Identifikator zum Identifizieren von einer der Vielzahl von UEs und ein Längenfeld zum Anzeigen einer Länge einer entsprechenden Nutzlast der Vielzahl von Nutzlasten aufweist; und
jede der Vielzahl von Nutzlasten einer unterschiedlichen UE der Vielzahl von UEs entspricht.

3. Verfahren nach Anspruch 1, das weiter Durchführen einer Vielzahl von erneuten Sendungen der wenigstens einen Nutzlast aufweist, und zwar ansprechend auf Empfangen einer Vielzahl von Nachrichten, die die erneute Sendung anfragen.

4. Verfahren nach Anspruch 1, das weiter Folgendes aufweist:
Empfangen einer erneuten Sendung der Vielzahl von Nutzlasten; und
Unterlassen des Sendens eines ACK oder einer negativen Bestätigung ansprechend auf Empfangen der erneuten Sendung.

5. Ein Verfahren (700) für Drahtloskommunikationen, das durch eine Basisstation bzw. BS (BS = base station) durchgeführt wird, das Folgendes aufweist:
Senden (702) einer Mehrnutzerkommunikation des physischen, gemeinsam genutzten Abwärtsstreckenkanals bzw. MUPC (MUPC = multi-user physical dowlink shared channel communication), die eine Vielzahl von Nutzlasten aufweist, an eine Vielzahl von UEs;
Empfangen (704) einer negativen Bestätigung bzw. eines NACK (NACK = negative acknowledgement) von einer ersten UE der Vielzahl von UEs ansprechend auf die MUPC;
Empfangen (706) einer Bestätigung bzw. eines ACK (ACK = acknowledgement) von einer zweiten UE der Vielzahl von UEs ansprechend auf die MUPC; und
Senden (708), an die zweite UE ansprechend auf Empfangen des NACK von der ersten UE und des ACK von der zweiten UE, einer ersten Nachricht, die anfragt, dass die zweite UE wenigstens eine Nutzlast der Vielzahl von Nutzlasten an eine oder mehrere andere UEs der Vielzahl von UEs erneut sendet, wobei die Nachricht eine Gruppen-RNTI-DCI (RNTI = radio network temporary identifier bzw. temporärer Funknetzwerkidentifikator, DCI = downlink control information bzw. Abwärtsstreckensteuerinformation) aufweist, die ein Feld zum Auslösen der erneuten Sendung aufweist, und wobei die DCI eine Ressource für die erneute Sendung unter Nutzung einer Zeitbereichsressourcenzuweisung bzw. TDRA (TDRA = time domain resource assignment) oder einer Frequenzbereichsressourcenzuweisung bzw. FDRA (FDRA = frequency domain resource assignment) identifiziert.

6. Eine Nutzereinrichtung bzw. UE (UE = user equipment) (120) für Drahtloskommunikation, die Folgendes aufweist:
einen Speicher, und
wenigstens einen Prozessor, der betriebsmäßig an den Speicher gekoppelt ist, wobei der Speicher und der wenigstens eine Prozessor konfiguriert sind zum:
Empfangen einer Mehrnutzerkommunikation des physischen, gemeinsam genutzten Abwärtsstreckenkanals bzw. MUPC (MUPC = multi-user physical dowlink shared channel communication), die eine Vielzahl von Nutzlasten aufweist,
Senden einer Bestätigung bzw. eines ACK (ACK = acknowledgement) ansprechend auf Decodieren der MUPC;
Empfangen einer Nachricht, die eine erneute Sendung von wenigstens einer Nutzlast der Vielzahl von Nutzlasten anfragt, wobei die Nachricht eine Gruppen-RNTI-DCI (RNTI = radio network temporary identifier bzw. temporärer Funknetzwerkidentifikator, DCI = downlink control information bzw. Abwärtsstreckensteuerinformation) aufweist, die ein Feld zum Auslösen der erneuten Sendung aufweist;
erneuten Senden der wenigstens einen Nutzlast an eine oder mehrere andere UEs ansprechend auf die Nachricht; und
zum Bestimmen einer Ressource für die erneute Sendung basierend auf einer Zeitbereichsressourcenzuweisung bzw. TDRA (TDRA = time domain resource assignment) oder einer Frequenzbereichsressourcenzuweisung bzw. FDRA (FDRA = frequency domain resource assignment) in der Gruppen-RNTI-DCI.

7. Eine Basisstation bzw. BS (BS =base station) (110) für Drahtloskommunikation, die Folgendes aufweist:
einen Speicher, und
einen Prozessor, der betriebsmäßig an den Speicher gekoppelt ist, wobei der Speicher und der wenigstens eine Prozessor konfiguriert sind:
zum Senden einer Mehrnutzerkommunikation des physischen, gemeinsam genutzten Abwärtsstreckenkanals bzw. MUPC (MUPC = multi-user physical dowlink shared channel communication), die eine Vielzahl von Nutzlasten aufweist, an eine Vielzahl von UEs;
zum Empfangen einer negativen Bestätigung bzw. eines NACK (NACK = negative acknowledgement) von einer ersten UE der Vielzahl von UEs ansprechend auf die MUPC;
zum Empfangen einer Bestätigung bzw. eines ACK (ACK = acknowledgement) von einer zweiten UE der Vielzahl von UEs ansprechend auf die MUPC; und
zum Senden, an die zweite UE ansprechend auf Empfangen des NACK von der ersten UE und des ACK von der zweiten UE, einer ersten Nachricht, die anfragt, dass die zweite UE wenigstens eine Nutzlast der Vielzahl von Nutzlasten an eine oder mehrere andere UEs der Vielzahl von UEs erneut sendet, wobei die Nachricht eine Gruppen-RNTI-DCI (RNTI = radio network temporary identifier bzw. temporärer Funknetzwerkidentifikator, DCI = downlink control information bzw. Abwärtsstreckensteuerinformation) aufweist, die ein Feld zum Auslösen der erneuten Sendung aufweist, und wobei die DCI eine Ressource für die erneute Sendung unter Nutzung einer Zeitbereichsressourcenzuweisung bzw. TDRA (TDRA = time domain resource assignment) oder einer Frequenzbereichsressourcenzuweisung bzw. FDRA (FDRA = frequency domain resource assignment) identifiziert.

## Revendications

1. Un procédé (600) de communications sans fil effectué par un équipement utilisateur, UE, comprenant :
la réception (602) d'une une communication multi-utilisateur physique, MUP, sur canal partagé de liaison descendante, PDSCH, MUPC, comprenant une pluralité de charges utiles ;
la transmission (604) d'un accusé de réception, ACK, en réponse au décodage du MUPC,
la réception (606) d'un message demandant la retransmission d'au moins une charge utile de la pluralité de charges utiles, le message comprenant des informations de contrôle de liaison descendante, DCI, d'identifiant temporaire de réseau radio de groupe, RNTI, comprenant un champ pour déclencher la retransmission ;
la retransmission (608) de l'au moins une charge utile à un ou plusieurs autre UE en réponse au message ; et
la détermination d'une ressource pour la retransmission sur la base d'une attribution de ressource dans le domaine temporel, TDRA, ou d'une attribution de ressource dans le domaine fréquentiel, FDRA, dans les DCI du RNTI de groupe.

2. Procédé selon la revendication 1, dans lequel :
la MUPC comprend en outre une pluralité de sous-en-têtes correspondant à une pluralité d'UE ;
chacun de la pluralité de sous-en-têtes comprend un identifiant d'UE pour identifier l'un de la pluralité d'UE et un champ de longueur pour indiquer une longueur d'une charge utile correspondante de la pluralité de charges utiles ; et
chacune de la pluralité de charges utiles correspondant à un UE différent de la pluralité d'UE.

3. Procédé selon la revendication 1, comprenant en outre la réalisation d'une pluralité de retransmissions de l'au moins une charge utile en réponse à la réception d'une pluralité de messages demandant la retransmission.

4. Procédé selon la revendication 1, comprenant en outre :
la réception d'une retransmission de la pluralité de charges utiles ; et
l'absence de transmission d'un accusé de réception, ACK, ou d'un accusé de réception négatif en réponse à la réception de la retransmission.

5. Procédé (700) de communications sans fil par une station de base (BS), comprenant :
la transmission (702) d'une une communication multi-utilisateur physique, MUP, sur canal partagé de liaison descendante, PDSCH, MUPC, comprenant une pluralité de données de charge utile à une pluralité d'UE ;
la réception (704) d'un accusé de réception négatif, NACK, d'un premier UE parmi les UE en réponse à la MUPC ;
la réception (706) d'un accusé de réception, ACK, d'un second UE parmi la pluralité d'UE en réponse à la MUPC, et
la transmission (708), au second UE, en réponse à la réception du NACK du premier UE et de l'ACK du second UE, d'un premier message demandant au second UE de retransmettre au moins une charge utile de la pluralité de charges utiles, dans lequel le message comprend des informations de contrôle de liaison descendante, DCI, d'identifiant temporaire de réseau radio de groupe, RNTI, comprenant un champ pour déclencher la retransmission, et les DCI identifiant une ressource pour la retransmission à l'aide d'une attribution de ressource dans le domaine temporel, TDRA, ou une attribution de ressource dans le domaine fréquentiel, FDRA.

6. Équipement utilisateur, UE, (120) pour la communication sans fil, comprenant :
une mémoire, et
au moins un processeur couplé fonctionnellement à la mémoire, la mémoire et le ou les processeurs étant configurés pour :
recevoir une communication multi-utilisateur physique, MUP, sur canal partagé de liaison descendante, PDSCH, MUPC, comprenant une pluralité de charges utiles ;
transmettre un accusé de réception, ACK, en réponse au décodage du MUPC ;
recevoir un message demandant la retransmission d'au moins une charge utile parmi la pluralité de charges utiles, le message comprenant des informations de contrôle de liaison descendante, DCI, d'identifiant temporaire de réseau radio de groupe, RNTI, comprenant un champ de déclenchement de la retransmission ;
retransmettre la ou les charges utiles à un ou plusieurs autre EU en réponse au message ; et
déterminer une ressource pour la retransmission sur la base d'une attribution de ressource dans le domaine temporel, TDRA, ou d'une attribution de ressource dans le domaine fréquentiel, FDRA, dans les DCI du RNTI de groupe.

7. Une station de base (BS) (110) pour la communication sans fil, comprenant :
une mémoire et
au moins un processeur couplé fonctionnellement à la mémoire, la mémoire et le ou les processeurs étant configurés pour transmettre une communication multi-utilisateur physique, MUP, sur canal partagé de liaison descendante, PDSCH, MUPC, comprenant une pluralité de charges utiles à une pluralité d'UE ;
recevoir un accusé de réception négatif, NACK, d'un premier UE parmi la pluralité d'UE en réponse à la MUPC ;
recevoir un accusé de réception, ACK, d'un second UE parmi la pluralité d'UE en réponse à la MUPC ; et
transmettre au second UE, en réponse à la réception du NACK du premier UE et de l'ACK du second UE, un premier message demandant au second UE de retransmettre au moins une charge utile de la pluralité de charges utiles à un ou plusieurs autre UE de la pluralité d'UE,
le message comprenant des informations de contrôle de liaison descendante, DCI, d'identifiant temporaire de réseau radio de groupe, RNTI, comprenant un champ pour déclencher la retransmission, et les DCI identifiant une ressource pour la retransmission à l'aide d'une attribution de ressource dans le domaine temporel, TDRA, ou une attribution de ressource dans le domaine fréquentiel, FDRA.
